# EUROPEAN PATENT SPECIFICATION

(11) **EP 1 243 452 B1**
(45) Date of publication and mention of the grant of the patent: **15.06.2005**
(21) Application number: 02251237.0
(22) Date of filing: 22.02.2002
(51) Int. Cl.: B60J 5/04, E05F 15/16

(54) **Door panel assembly with window regulator and assembly method**
KFZ-Türträgerblech mit Fensterheberantrieb und Montagemethode
Assemblage pour panneau de porte avec mécanisme lève-vitre et méthode de montage

(30) Priority: 21.03.2001 GB 0107066
(43) Date of publication of application: 25.09.2002
(73) Proprietor: ArvinMeritor Light Vehicle Systems-France, 45600 Sully sur Loire (FR)
(72) Inventor: Lawrie, Mark Graham, 45600 Lion en Sulias (FR); Le Gallo, Yann, 4510 Orleans (FR); De Vries, Pascal, 45640 Sandillion (FR); Blume, Klaus Bruno Wilhelm, 64569 Nauheim (DE); Hopson, Charles Berry, Lebanon, TN 37087 (US); Laurandel, Herve, 14200 Herouville, St Claire (FR); Dobson, Simon Blair, Sandgate, Kent CT20 37A (FR); Cabanne, Damien, 77 Fontainebleau (FR)
(74) Representative: Jones, John Bryn

(56) References cited:
- DE-C- 19 707 850
- DE-C- 19 812 875
- PATENT ABSTRACTS OF JAPAN vol. 2000, no. 12, 3 January 2001 (2001-01-03) -& JP 2000 238528 A (OI SEISAKUSHO CO LTD), 5 September 2000 (2000-09-05)
- PATENT ABSTRACTS OF JAPAN vol. 2000, no. 24, 11 May 2001 (2001-05-11) -& JP 2001 199236 A (YAZAKI CORP), 24 July 2001 (2001-07-24)
- Computer generated translation of description and referece signs of D1.

## Description

The present invention relates to door panel assemblies and particular door panel assemblies including window regulator cable drum housings for use in vehicles such as cars (automobiles).

Known cars include doors having windows. It is possible to lower and raise a window glass in order to open and close the window. The vertical position of the window glass is controlled by a window regulator, parts of which are generally secured to a lower edge of the window glass.

The door includes and outer skin and an inner door panel which provide for a cavity within the door within which is a located part of the window regulator and also in which locates the window glass when in a lowered position. The door cavity side of the door inner panel is known as the "wet" side and the other side of the door inner panel i.e. the side which faces the interior of the vehicle is known as the "dry" side.

One form of window regulator is the cable operated window regulator which uses cursors attached to a cable to raise and lower the window glass. The cable is moved by wrapping ends of the cable around a cable drum and then rotating the cable drum in a clockwise or an anti-clockwise direction to raise and lower the window glass. The cable drum is secured to the wet side of the door inner panel.

A motor is secured to the dry side of a door inner panel. The motor includes an axle which projects through the panel on which the drum is rotatably mounted.

A problem with this design that it is important to align the cable drum housing accurately with the motor and the sandwiching of the door inner panel between these two components adds a further manufacturing tolerance error.

Existing arrangements of door panel assembly are disclosed in JP 2000 238528 and US 6427386. US6427386 representing the relevant prior art discloses a door panel assembly according to the preambles of claims 1 and 3 and of the corresponding method claims 12 and 13.

An object of the present invention is to provide an improved form of door inner panel assembly.

Thus according to a first aspect of the present invention there is provided, a door panel assembly including a door panel having a dry side and a wet side, a drive mechanism being secured to the door panel via at least a first mounting feature and a cable drum housing being secured to the door panel via at least a second mounting feature, the at least one first and at least one second mounting feature being located on the same side of the door panel, characterised in that at least one second mounting feature is sandwiched between said at least one first mounting feature and the door panel on the dry side.

According to a second aspect of the invention there is provided, a door panel assembly including a door panel having a dry side and a wet side, a drive mechanism being secured to the door panel via at least a first mounting feature and a cable drum housing being secured to the door panel via at least a second mounting feature, the at least one first and at least one second mounting feature being located on the same side of the door panel characterised in that at least one first mounting feature is sandwiched between said at least one second mounting feature and the door panel on the wet side.

According to a third aspect of the invention there is provided a method of assembling a door panel assembly comprising the steps of providing including a door panel having a dry side and a wet side, a drive mechanism being secured to the door panel via at least a first mounting feature and a cable drum housing being secured to the door panel via at least a second mounting feature, the at least one first and at least one second mounting feature being located on the same side of the door panel, characterised in that said at least one second mounting feature is sandwiched between said at least one first mounting feature and the door panel on the dry side, providing a sub-assembly of a drive mechanism and a cable drum housing, mounting the sub-assembly onto the door panel and securing it thereto.

According to a fourth aspect of the invention there is provided a method of assembling a cloor panel assembly comprising the steps of providing a door panel having a dry side and a wet side, a drive mechanism being secured to the door panel via at least a first mounting feature and a cable drum housing being secured to the door panel via at least a second mounting feature, the at least one first and at least one second mounting feature being located on the same side of the door panel characterised in that said at least one first mounting feature is sandwiched between said at least one second mounting feature and the door panel on the wet side, providing a sub-assembly of a drive mechanism and a cable drum housing, mounting the sub-assembly on to the door panel and securing it thereto.

The invention will now be described, by way of example only, with reference to the accompanying drawings in which :-
Figure 1 is a cross section view of a first embodiment of a door panel assembly according to the present invention;
Figure 2 is a second embodiment of a door panel assembly according to the present invention; and
Figure 3 is a view of the door panel assembly of figure 2 taken in the direction of arrow A.

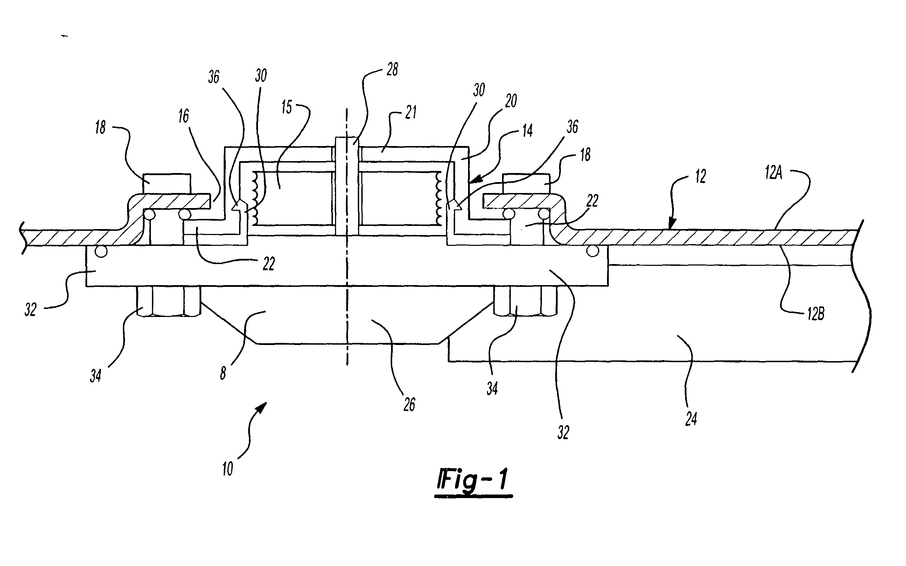

With reference to figure 1 there is shown a door panel assembly 10 including a door panel 12, a window regulator cable drum housing 14 and a drive mechanism in the form of a window regulator motor assembly 8.

Door panel 12 would typically be in the form of an inner panel pressing which is connected to an outer door skin to provide for a door structure of a vehicle such as a car (automobile).

Alternatively the door panel could be in the form of a door panel module mounting plate (also known as a carrier plate) upon which is mounted various components of the door. The module mounting plate then being secured in a relatively large aperture of the inside of an associated door. Alternatively the door inner panel may be a window regulator motor mounting plate.

The door panel 12 includes a drum hole 16 and threaded fixing holes 18. Door panel 12 has sides 12A (wet side) and 12B (dry side).

Cable drum housing 14 includes a housing portion 20 which is generally cylindrical in shape and includes a housing portion closure 21.

Attached to the housing portion at spaced locations are mounting features in the form of lugs 22, each having a through hole.

Mounted in the housing portion 20 is a cable drum 15 around which is wound the window regulator cables.

Window regulator motor assembly 8 includes an electric motor 24 in driving connection with a gearbox housed in gearbox housing 26. The gearbox has an output axle 28, upon which is mounted the cable drum.

The gearbox housing 26 includes alignment features in the form of fingers 30 which engage with an inner surface of housing portion 20 to correctly align the window regulator motor assembly 8 with the cable drum housing 14.

Gearbox housing 26 includes mounting features in the form of lugs 32 (only two of the three lugs shown) having through holes. Bolts 34 pass through the holes in lugs 32 and lugs 22 and are threaded into threaded fixing holes 18 to secure both the window regulator motor assembly 8 and the cable drum housing 14 door panel 12.

It can be seen that the electric motor 24 and its associated electrical connectors are advantageously located on the dry side of the door panel 12. Furthermore it can be seen that features of the window regulator motor assembly engage directly with features of the cable drum housing to provide for correct alignment between these two components. It should be noted that manufacturing tolerance errors in door panel 12 do not affect the alignment between window regulator motor assembly 8 and cable drum housing 14.

It should also be noted that the window regulator motor assembly 8 and cable drum housing 14 can be provided as a sub-assembly prior to fixing on to the door panel 12. To this end fingers 30 are provided with barbs 36 to provide for a snap fit engagement with the inner part of housing portion 20.

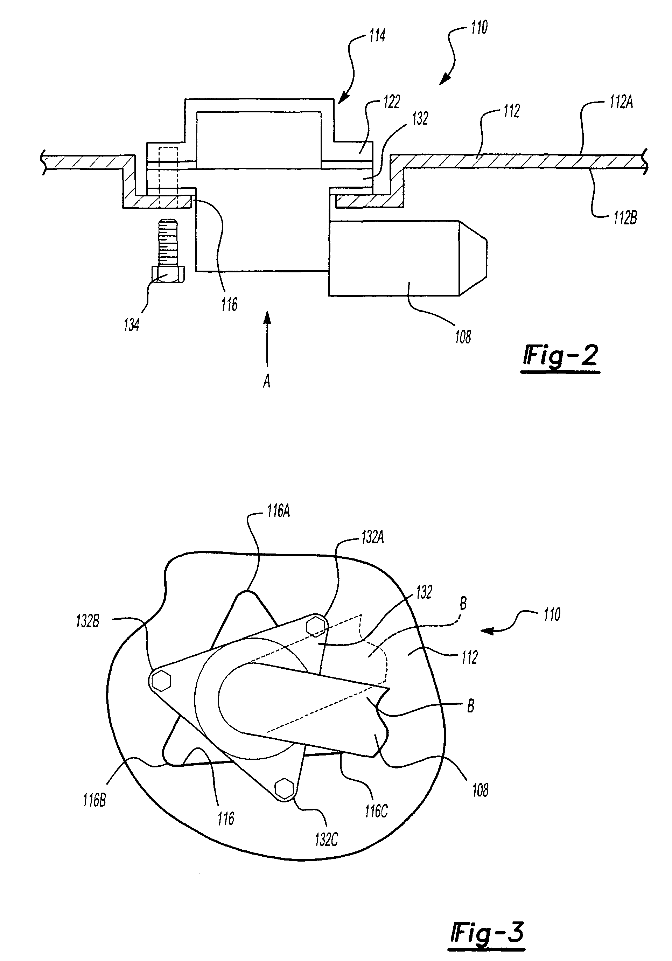

With reference to figures 2 and 3 there is shown a door panel assembly 110 with components which fulfil the same function as door panel assembly 10 labelled 100 greater.

In this case door panel 112 has a substantially equilateral triangular shaped holes 116 which corresponds to and is slightly larger than the peripheral shape of the cable drum housing 114 and window regulator motor assembly 108 at the interface of these two components ie a cross section taken through lugs 122 or lugs 132 is triangular.

The window regulator motor assembly 108 and cable drum housing 114 are provided as a sub-assembly and then lugs 132A, 132B and 132C (see figure 3) are aligned with the corresponding apexes 116A, 116B and 116C of hole 116 to allow cable drum housing 114 and lugs 132 to pass through hole 116 from the dry side to the wet side. Note that the position of motor 108 is shown chain dotted at B during this process.

The window regulator motor assembly and cable drum housing are then rotated through approximately 60 degrees to the position shown in figure 3 and bolts 134 (only one shown) can be passed through the clearance holes in panel 112 and lugs 132 and can engage in threaded holes in lugs 122 to secure both the window regulator motor assembly and cable drum housing to the panel 112.

It should be noted that manufacturing tolerance errors on door panel 112 do not affect the alignment between cable drum housing 114 and window regulator motor assembly 108. Furthermore it can be seen that the motor 108 is located on the dry side of panel 112 and that the window regulator motor assembly 108 and cable drum housing 114 can be assembled from the dry side to the position as shown in figure 2 and that bolt 134 can also be secured from the dry side. This is particularly advantageous when window regulator motor assembly 108 has to be replaced in the event of an electrical failure etc.

In alternative embodiments the window regulator motor assembly may be replaced by a manual window regulator drive mechanism.

## Claims

1. A door panel assembly (10) including a door panel (12) having a dry side and a wet side, a drive mechanism (8) being secured to the door panel via at least a first mounting feature (32) and a cable drum housing (14) being secured to the door panel via at least a second mounting feature (22), the at least one first and at least one second mounting feature being located on the same side of the door panel, **characterised in that** said at least one second mounting feature (22) is sandwiched between said at least one first mounting feature (32) and the door panel (12) on the dry side.

2. A door panel assembly as defined in claim 1 in which a portion (20) of the cable drum housing projects through the door panel on the wet side.

3. A door panel assembly (110) including a door panel (112) having a dry side and a wet side, a drive mechanism (108) being secured to the door panel via at least a first mounting feature (132) and a cable drum housing (114) being secured to the door panel via at least a second mounting feature (122), the at least one first and at least one second mounting feature being located on the same side of the door panel **characterised in that** said at least one first mounting feature (132) is sandwiched between said at least one second mounting feature (122) and the door panel (112) on the wet side.

4. A door panel assembly (10, 110) as defined any preceding claim in which the drive mechanism includes a drive system capable of driving a cable drum (15) mounted on an axle (28) in the cable drum housing (14, 114) with the drive system being substantially located on the dry side and with the axle being at least partially located on the wet side.

5. A door panel assembly (10, 110) as defined in any preceding claim in which the drive mechanism includes a motor (24).

6. A door panel assembly (10, 110) as defined in any preceding claim in which at least one fastener (34, 134) acts to secure both the drive mechanism (8, 108) and the cable drum housing (14, 114) to the door panel.

7. A door panel assembly (10, 110) as defined in claim 6 in which the at least one fastener (34, 134) passes through at least one of the first and second mounting features to secure the drive mechanism (8, 108) and cable drum housing (14, 114) to the door panel.

8. A door panel assembly (10, 110) as defined in any preceding claim in which alignment features (36) on the drive mechanism (8, 108) engage corresponding features on the cable drum housing (14, 114) to align the drive mechanism (8, 108) relative to the cable drum housing (14, 114).

9. A door panel assembly (10, 110) as defined in claim 8 in which the alignment features include fingers on the drive mechanism (8, 108) for engagement with the inner periphery of a housing portion of the cable drum housing (14, 114).

10. A door panel assembly (10, 110) as defined in claim 8 or 9 in which the alignment features further secure the drive mechanism (8, 108) relative to the cable drum housing (14, 114).

11. A door panel assembly (10, 110) as defined in any preceding claim in which there are three first mounting features and three second mounting features.

12. A method of assembling a door panel assembly (10) comprising the steps of providing a door panel (12) having a dry side and a wet side, a drive mechanism (8) being secured to the door panel via at least a first mounting feature (32) and a cable drum housing (14) being secured to the door panel via at least a second mounting feature (22), the at least one first and at least one second mounting feature being located on the same side of the door panel, **characterised in that** said at least one second mounting feature (22) is sandwiched between said at least one first mounting feature (32) and the door panel (12) on the dry side, providing a sub-assembly of a drive mechanism (8) and a cable drum housing (14), mounting the sub-assembly onto the door panel and securing it thereto.

13. A method of assembling a door panel assembly (110) comprising the steps of providing a door panel (112) having a dry side and a wet side, a drive mechanism (108) being secured to the door panel via at least a first mounting feature (132) and a cable drum housing (114) being secured to the door panel via at least a second mounting feature (122), the at least one first and at least one second mounting feature being located on the same side of the door panel **characterised in that** said at least one first mounting feature (132) is sandwiched between said at least one second mounting feature (122) and the door panel (112) on the wet side, providing a sub-assembly of a drive mechanism (108) and a cable drum housing (114), mounting the sub-assembly on to the door panel and securing it thereto.

14. A method of assembling a door panel assembly (10, 110) according to claim 12 or 13 in which the drive mechanism includes a drive system capable of driving a cable drum (15) mounted on an axle (28) in the cable drum housing (14, 114) with the drive system being substantially located on the dry side and with the axle being at least partially located on the wet side, the method including the step of providing a door panel with a hole, passing the cable drum housing and said at least one second mounting feature through the hole from the dry side to the wet side and securing the said assembly to the door panel.

15. A method of assembling a door panel assembly (10, 110) according to claim 14 further including the step of rotating the sub-assembly once it has been passed through the hole to align the at least one first and second mounting features at an attaching position and then securing the sub-assembly to the door panel (12, 112).

## Patentansprüche

1. Türpaneelbaugruppe (10) mit einem Türpaneel (12) mit einer trockenen Seite und einer feuchten Seite, einem Antriebsmechanismus (8), der an dem Türpaneel über mindestens ein erstes Montagemerkmal (32) befestigt ist, und einem Seiltrommelgehäuse (14), das an dem Türpaneel über mindestens ein zweites Montagemerkmal (22) befestigt ist, wobei das mindestens eine erste und mindestens eine zweite Montagemerkmal auf derselben Seite des Türpaneels angeordnet sind, **dadurch gekennzeichnet, daß** das mindestens eine zweite Montagemerkmal (22) zwischen das mindestens eine erste Montagemerkmal (32) und das Türpaneel (12) auf der trockenen Seite sandwichartig angeordnet ist.

2. Türpaneelbaugruppe nach Anspruch 1, bei welcher ein Teil (20) des Seiltrommelgehäuses durch das Türpaneel auf der feuchten Seite vorsteht.

3. Türpaneelbaugruppe (110) mit einem Türpaneel (112) mit einer trockenen Seite und einer feuchten Seite, einem Antriebsmechanismus (108), der an dem Türpaneel über mindestens ein erstes Montagemerkmal (132) befestigt ist, und einem Seiltrommelgehäuse (114), das an dem Türpaneel über mindestens ein zweites Montagemerkmal (122) befestigt ist, wobei das mindestens eine erste und das mindestens eine zweite Montagemerkmal auf derselben Seite des Türpaneels angeordnet sind, **dadurch gekennzeichnet, daß** das mindestens eine erste Montagemerkmal (132) zwischen das mindestens eine zweite Montagemerkmal (122) und das Türpaneel (112) auf der feuchten Seite sandwichartig angeordnet ist.

4. Türpaneelbaugruppe (10, 110) nach einem vorangehenden Anspruch, bei welcher der Antriebsmechanismus ein Antriebssystem umfaßt, das in der Lage ist, eine Seiltrommel (15) anzutreiben, die an einer Achse (28) im Seiltrommelgehäuse (14, 114) montiert ist, wobei das Antriebssystem im Wesentlichen auf der trockenen Seite angeordnet ist und wobei die Achse zumindest teilweise auf der feuchten Seite angeordnet ist.

5. Türpaneelbaugruppe (10, 110) nach einem vorangehenden Anspruch, bei welcher der Antriebsmechanismus einen Motor (24) umfaßt.

6. Türpaneelbaugruppe (10, 110) nach einem vorangehenden Anspruch, bei welcher mindestens eine Befestigungsvorrichtung (34, 134) zum Befestigen sowohl des Antriebsmechanismus (8, 108) als auch des Seiltrommelgehäuses (14, 114) an dem Türpaneel wirkt.

7. Türpaneelbaugruppe (10, 110) nach Anspruch 6, bei welcher die mindestens eine Befestigungsvorrichtung (34, 134) durch mindestens eines des ersten und des zweiten Montagemerkmals verläuft, um den Antriebsmechanismus (8, 108) und das Seiltrommelgehäuse (14, 114) am Türpaneel zu befestigen.

8. Türpaneelbaugruppe (10, 110) nach einem vorangehenden Anspruch, bei welcher Ausrichtungsmerkmale (36) am Antriebsmechanismus (8, 108) mit entsprechenden Merkmalen am Seiltrommelgehäuse (14, 114) in Eingriff stehen, um den Antriebsmechanismus (8, 108) relativ zum Seiltrommelgehäuse (14, 114) auszurichten.

9. Türpaneelbaugruppe (10, 110) nach Anspruch 8, bei welcher die Ausrichtungsmerkmale Finger am Antriebsmechanismus (8, 108) zum Eingriff mit dem inneren Umfang eines Gehäuseteils des Seiltrommelgehäuses (14, 114) umfassen.

10. Türpaneelbaugruppe (10, 110) nach Anspruch 8 oder 9, bei welcher die Ausrichtungsmerkmale ferner den Antriebsmechanismus (8, 108) relativ zum Seiltrommelgehäuse (14, 114) befestigen.

11. Türpaneelbaugruppe (10, 110) nach einem vorangehenden Anspruch, bei welcher drei erste Montagemerkmale und drei zweite Montagemerkmale vorhanden sind.

12. Verfahren zum Montieren einer Türpaneelbaugruppe (10) mit den Schritten des Bereitstellens eines Türpaneels (12) mit einer trockenen Seite und einer feuchten Seite, eines Antriebsmechanismus (8), der an dem Türpaneel über mindestens ein erstes Montagemerkmal (32) befestigt wird, und eines Seiltrommelgehäuses (14), das an dem Türpaneel über mindestens ein zweites Montagemerkmal (22) befestigt wird, wobei das mindestens eine erste und das mindestens eine zweite Montagemerkmal auf derselben Seite des Türpaneels angeordnet werden, **dadurch gekennzeichnet, daß** das mindestens eine zweite Montagemerkmal (22) zwischen das mindestens eine erste Montagemerkmal (32) und das Türpaneel (12) auf der trockenen Seite sandwichartig angeordnet wird, des Bereitstellens einer Unterbaugruppe eines Antriebsmechanismus (8) und eines Seiltrommelgehäuses (14), des Montierens der Unterbaugruppe an dem Türpaneel und des Befestigens derselben an diesem.

13. Verfahren zum Montieren einer Türpaneelbaugruppe (110) mit den Schritten des Bereitstellens eines Türpaneels (112) mit einer trockenen Seite und einer feuchten Seite, eines Antriebsmechanismus (108), der an dem Türpaneel über mindestens ein erstes Montagemerkmal (132) befestigt wird, und eines Seiltrommelgehäuses (114), das an dem Türpaneel über mindestens ein zweites Montagemerkmal (122) befestigt wird, wobei das mindestens eine erste und das mindestens eine zweite Montagemerkmal auf derselben Seite des Türpaneels angeordnet werden, **dadurch gekennzeichnet, daß** das mindestens eine erste Montagemerkmal (132) zwischen das mindestens eine zweite Montagemerkmal (122) und das Türpaneel (112) auf der feuchten Seite sandwichartig angeordnet wird, des Bereitstellens einer Unterbaugruppe eines Antriebsmechanismus (108) und eines Seiltrommelgehäuses (114), des Montierens der Unterbaugruppe an dem Türpaneel und des Befestigens derselben an diesem.

14. Verfahren zum Montieren einer Türpaneelbaugruppe (10, 110) nach Anspruch 12 oder 13, bei welchem der Antriebsmechanismus ein Antriebssystem umfaßt, das in der Lage ist, eine Seiltrommel (15), die an einer Achse (28) im Seiltrommelgehäuse (14, 114) montiert ist, anzutreiben, wobei das Antriebssystem im Wesentlichen auf der trockenen Seite angeordnet wird und wobei die Achse zumindest teilweise auf der feuchten Seite angeordnet wird, wobei das Verfahren den Schritt des Bereitstellens eines Türpaneels mit einem Loch, das Führens des Seiltrommelgehäuses und des mindestens einen zweiten Montagemerkmals durch das Loch von der trockenen Seite zur feuchten Seite und des Befestigens der Baugruppe am Türpaneel umfaßt.

15. Verfahren zum Montieren einer Türpaneelbaugruppe (10, 110) nach Anspruch 14, welches ferner den Schritt des Drehens der Unterbaugruppe, sobald sie durch das Loch geführt wurde, um das mindestens eine erste und zweite Montagemerkmal in einer Befestigungsposition auszurichten, und dann des Befestigens der Unterbaugruppe am Türpaneel (12, 112) umfaßt.

## Revendications

1. Un assemblage de panneau de porte (10) comprenant un panneau de porte (12) ayant un côté sec et un côté humide, un mécanisme d'entraînement (8) étant fixé sur le panneau de porte par le biais d'au moins un premier élément de montage (32) et un logement de tambour d'enroulement de câble (14) étant fixé sur le panneau de porte par le biais d'au moins un second élément de montage (22), le ou les premier(s) et le ou les second(s) éléments de montage étant situés du même côté du panneau de porte, **caractérisé en ce que** ledit ou lesdits second(s) élément(s) de montage (22) est (sont) intercalé(s) entre ledit ou lesdits premier(s) élément(s) de montage (32) et le panneau de porte (12) du côté sec.

2. Un assemblage de panneau de porte selon la revendication 1, dans lequel une partie (20) du logement de tambour d'enroulement de câble traverse le panneau de porte et dépasse du côté humide.

3. Un assemblage de panneau de porte (110) comprenant un panneau de porte (112) ayant un côté sec et un côté humide, un mécanisme d'entraînement (108) étant fixé sur le panneau de porte par le biais d'au moins un premier élément de montage (132) et un logement de tambour d'enroulement de câble (114) étant fixé sur le panneau de porte par le biais d'au moins un second élément de montage (122), le ou les premier(s) et le ou les second(s) éléments de montage étant situés du même côté du panneau de porte, **caractérisé en ce que** ledit ou lesdits premier(s) élément(s) de montage (132) est (sont) intercalé(s) entre ledit ou lesdits second(s) élément(s) de montage (122) et le panneau de porte (112) du côté humide.

4. Un assemblage de panneau de porte (10, 110) selon l'une quelconque des revendications précédentes, dans lequel le mécanisme d'entraînement comprend un système d'entraînement apte à entraîner un tambour d'enroulement de câble (15) monté sur un axe (28) dans le logement de tambour d'enroulement de câble (14, 114), le système d'entraînement étant sensiblement situé du côté sec et l'axe étant au moins partiellement situé du côté humide.

5. Un assemblage de panneau de porte (10, 110) selon l'une quelconque des revendications précédentes, dans lequel le mécanisme d'entraînement comprend un moteur (24).

6. Un assemblage de panneau de porte (10, 110) selon l'une quelconque des revendications précédentes, dans lequel au moins une attache (34, 134) permet de fixer à la fois le mécanisme d'entraînement (8, 108) et le logement de tambour d'enroulement de câble (14, 114) sur le panneau de porte.

7. Un assemblage de panneau de porte (10, 110) selon la revendication 6, dans lequel la ou les attache(s) (34, 134) traverse(nt) au moins l'un des premier et second éléments de montage afin de fixer le mécanisme d'entraînement (8, 108) et le logement de tambour d'enroulement de câble (14, 114) sur le panneau de porte.

8. Un assemblage de panneau de porte (10, 110) selon l'une quelconque des revendications précédentes, dans lequel des éléments de centrage (36) situés sur le mécanisme d'entraînement (8, 108) sont en prise avec des éléments correspondants sur le logement de tambour d'enroulement de câble (14, 114) afin de centrer le mécanisme d'entraînement (8, 108) par rapport au logement de tambour d'enroulement de câble (14, 114).

9. Un assemblage de panneau de porte (10, 110) selon la revendication 8, dans lequel les éléments de centrage comprennent des doigts situés sur le mécanisme d'entraînement (8, 108) destinés à être en prise avec la périphérie interne d'une partie de logement du logement de tambour d'enroulement de câble (14, 114).

10. Un assemblage de panneau de porte (10, 110) selon la revendication 8 ou 9, dans lequel les éléments de centrage fixent en outre le mécanisme d'entraînement (8, 108) par rapport au logement de tambour d'enroulement de câble (14, 114).

11. Un assemblage de panneau de porte (10, 110) selon l'une quelconque des revendications précédentes, dans lequel se trouvent trois premiers éléments de montage et trois seconds éléments de montage.

12. Un procédé pour le montage d'un assemblage de panneau de porte (10), comprenant les étapes consistant à fournir un panneau de porte (12) ayant un côté sec et un côté humide, un mécanisme d'entraînement (8) étant fixé sur le panneau de porte par le biais d'au moins un premier élément de montage (32) et un logement de tambour d'enroulement de câble (14) étant fixé sur le panneau de porte par le biais d'au moins un second élément de montage (22), le ou les premier(s) et le ou les second(s) élément(s) de montage étant situés du même côté du panneau de porte, **caractérisé en ce que** ledit ou lesdits second(s) élément(s) de montage (22) est (sont) intercalé(s) entre ledit ou lesdits premier(s) éléments(s) de montage (32) et le panneau de porte (12) du côté sec, et consistant à fournir un sous-ensemble d'un mécanisme d'entraînement (8) et un logement de tambour d'enroulement de câble (14), à monter le sous-ensemble sur le panneau de porte et à le fixer sur celui-ci.

13. Un procédé pour le montage d'un assemblage de panneau de porte (110), comprenant les étapes consistant à fournir un panneau de porte (112) ayant un côté sec et un côté humide, un mécanisme d'entraînement (108) étant fixé sur le panneau de porte par le biais d'au moins un premier élément de montage (132) et un logement de tambour d'enroulement de câble (114) étant fixé sur le panneau de porte par le biais d'au moins un second élément de montage (122), le ou les premier(s) et le ou les second(s) éléments de montage étant situés du même côté du panneau de porte, **caractérisé en ce que** ledit ou lesdits premier(s) élément(s) de montage (132) est intercalé entre ledit ou lesdits second(s) élément(s) de montage (122) et le panneau de porte (112) du côté humide, et consistant à fournir un sous-ensemble d'un mécanisme d'entraînement (108) et un logement de tambour d'enroulement de câble (114), à monter le sous-ensemble sur le panneau de porte et à le fixer sur celui-ci.

14. Un procédé pour le montage d'un assemblage de panneau de porte (10, 110) selon la revendication 12 ou 13, dans lequel le mécanisme d'entraînement comprend un système d'entraînement apte à entraîner un tambour d'enroulement de câble (15) monté sur un axe (28) dans le logement de tambour d'enroulement de câble (14, 114), le système d'entraînement étant sensiblement situé du côté sec et l'axe étant au moins partiellement situé du côté humide, le procédé comprenant l'étape consistant à fournir un panneau de porte avec une ouverture, à faire passer le logement de tambour d'enroulement de câble et ledit ou lesdits second(s) élément(s) de montage à travers l'ouverture à partir du côté sec vers le côté humide et à fixer ledit assemblage sur le panneau de porte.

15. Un procédé pour le montage d'un assemblage de panneau de porte (10, 110) selon la revendication 14, comprenant en outre l'étape consistant à faire tourner le sous-ensemble une fois qu'il est passé à travers l'ouverture afin de centrer le ou les premier(s) et second(s) éléments de montage dans une position de fixation, puis à fixer le sous-ensemble sur le panneau de porte (12, 112).
